# EUROPEAN PATENT APPLICATION

(11) **EP 4 810 706 A1**
(43) Date of publication of application: **23.09.2026**
(21) Application number: 24891256.0
(22) Date of filing: 01.11.2024
(51) Int. Cl.: D06M 10/00, C04B 35/80, D06M 11/80

(54) **METHOD FOR COATING REINFORCED FIBER**

(30) Priority: 14.11.2023 JP 2023193571
(71) Applicant: IHI CORPORATION, Tokyo 135-8710 (JP)
(72) Inventor: OJIRO Yoshihiro, Tokyo 135-8710 (JP)
(74) Representative: MERH-IP Matias Erny Reichl Hoffmann Patentanwälte PartG mbB
(86) International application number: PCT/JP2024/039068
(87) International publication number: WO 2025/105217

(57) **Abstract**

A method for coating a reinforcing fiber with a ceramic is provided with: introducing the reinforcing fiber into an atmosphere including a gas-phase precursor; irradiating an irradiation point on the reinforcing fiber with a light beam so as to heat the irradiation point to 800 degrees C or higher, whereby the ceramic grows on the irradiation point; and moving the irradiation point along a length of the reinforcing fiber.

## Description

### TECHNICAL FIELD

The present disclosure relates to a method for using a photochemical gas phase synthesis method to coat a reinforcing fiber with a ceramic.

### BACKGROUND ART

Ceramics have excellent strength and heat resistance but at the same time many of them have a drawback of brittleness. To overcome the brittleness, many attempts have been tested, in which a ceramic is used as a matrix and is combined with reinforcing fibers of an inorganic substance such as SiC. For example, several hundreds of reinforcing fibers are bundled to form a reinforcing fiber bundle, a number of fiber bundles are woven into a fabric, and gaps between the fibers therein are filled with a ceramic by any proper infiltration method, thereby producing a fiber-reinforced composite. The chemical vapor infiltration (CVI) method, the liquid phase infiltration (polymer infiltration and pyrolysis, for example), the solid phase infiltration (SPI), the molten infiltration (MI), and such have been tested so far.

According to any of the infiltration methods, there have been problems in that the growth rate of the ceramics was limited, or the gaps between the fibers have not been sufficiently filled with the ceramic. These problems become more pronounced as the fabric is enlarged, particularly around its center. To compensate for the drawbacks, various attempts have been tested, in some of which two or more methods are used in combination, but, in any case, it is unavoidable that production of fiber-reinforced composites requires a longer time.

The patent literatures 1, 2 disclose related arts.

### Citation List

### Patent Literature

| | |
|---|---|
| PTL 1: | PCT International Publication WO 2018/047419 A1 |
| PTL 2: | PCT International Publication WO 2018/034024 A1 |

### SUMMARY OF THE INVENTION

The art disclosed hereinafter is intended to grow a ceramic rapidly on reinforcing fibers using light irradiation.

A method for coating a reinforcing fiber with a ceramic is provided with: introducing the reinforcing fiber into an atmosphere including a gas-phase precursor; irradiating an irradiation point on the reinforcing fiber with a light beam so as to heat the irradiation point to 800 degrees C or higher, whereby the ceramic grows on the irradiation point; and moving the irradiation point along a length of the reinforcing fiber.

Preferably, the irradiating is carried out by one or more selected from the group of a halogen lamp, an excimer lamp, and a laser oscillator. Or preferably, the precursor consists of one or more selected from any combinations of any of methyltrichlorosilane, dimethyltrichlorosilane, polycarbosilane, and silane and any of methane, ethylene and acetylene. Further preferably, the method further includes mixing the precursor with a carrier gas and reducing a total pressure from atmospheric pressure by from 20 kPa to 100 kPa. Yet preferably, the method further includes arranging a second reinforcing fiber in parallel to the reinforcing fiber; and irradiating the second reinforcing fiber with the light beam simultaneously with or subsequently to the irradiating the reinforcing fiber, whereby the reinforcing fiber and the second reinforcing fiber are bonded together by the ceramic.

### EFFECTS OF THE INVENTION

An art for covering a reinforcing fiber with a ceramic rapidly is provided.

### BRIEF DESCRIPTION OF THE DRAWINGS

FIG. 1 is a block diagram generally and schematically illustrating a device for covering a reinforcing fiber with a ceramic.
FIG. 2 is a schematic perspective view of a reinforcing fiber bundle in which a plurality of fibers is bundled together.
FIG. 3 is a schematic perspective view illustrating a method for spreading the reinforcing fiber bundle.
FIG. 4 is a perspective view illustrating an overview of a device for spreading fiber bundles.
FIG. 5 is an elevational view schematically showing a part of the device of FIG. 1, which is used to feed a reinforcing fiber to an irradiation point subject to light irradiation.
FIG. 6 is a schematic plan view of a device for supporting the reinforcing fibers.
FIG. 7 is a SEM image illustrating a state where films formed by gas phase synthesis respectively cover reinforcing fibers.
FIG. 8 is a SEM image illustrating a state where reinforcing fibers are bonded together by a film grown from a liquid phase and films grown from a gas phase.
FIG. 9 is a SEM image illustrating a state where reinforcing fibers are bonded together by a film grown from a liquid phase.
FIG. 10 is a SEM image illustrating reinforcing fibers with films grown from a gas phase.
FIG. 11 is a block diagram of a feeding system applicable to a case where four gas phase ingredient gases are fed to a production device.
FIG. 12 is a sectional SEM image of an example where silane is used as an ingredient.

### DESCRIPTION OF EMBODIMENTS

Certain embodiments will be described hereinafter with reference to the appended drawings.

The art described hereinafter generally relates to growing a ceramic on a reinforcing fiber to coat the fiber.

The reinforcing fiber is for example, but not limited to, a fiber formed of carbon, silicon carbide, silicon nitride or alumina. To the ceramic covering the reinforcing fiber applicable is any of proper structural ceramics and examples thereof are carbon, carbides, nitrides, borides and silicate glasses. Or more preferably applicable are non-oxide ceramics and examples thereof are carbon, silicon carbide and silicon nitride. These examples are, however, non-exhaustive.

Growth of the ceramic is achieved by, for example, irradiating a point on the reinforcing fiber with converged energy flow such as a light beam to heat the irradiated point, and using chemical and/or physical reactions due to the temperature rise to convert a precursor into the ceramic. The ceramic precursor may be in any of a gas phase, a liquid phase, and a solid phase, or in combined phases thereof, but particularly a gas phase precursor is preferably applicable.

With allowing the reaction to continue, the irradiation device is moved along the reinforcing fiber and/or the reinforcing fiber is moved in its longitudinal direction, so the irradiation point can be moved along a length of the reinforcing fiber. Consequently the ceramic grows along and covers the reinforcing fiber.

While the energy flow needs to be focused to a sufficient degree to cause a temperature increase at the irradiation point, the diameter of the irradiation point, or the area heated by the irradiation, can be considerably larger than the diameter of the reinforcing fiber. Rather, the diameter of the irradiation point or the area heated by the irradiation is in the order of ϕ1 mm, which is larger than the diameter of the reinforcing fiber, normally in the order of ϕ10 µm. Numerous reinforcing fibers may be simultaneously heated within the irradiation point and therefore the ceramic can grow simultaneously on the numerous reinforcing fibers arranged close and parallel to each other, so that the ceramic covering these reinforcing fibers can bond these fibers together. Or, just after the growth reaction, a new reinforcing fiber can be arranged closely and further ceramic growth can be repeated so as to realize two-dimensional growth. Needless to say, by repeating the ceramic growth with overlaying new reinforcing fibers vertically, three-dimensional growth of a fiber-reinforced composite can be enabled. The grown ceramic functions as a matrix and it is thus possible to manufacture a bulk fiber-reinforced composite.

As the reinforcing fiber is very thin and therefore its temperature rises very rapidly at the irradiation point, rapid growth can occur. On the other hand, the temperature rise is limited to a specific area around the irradiation point and therefore an unintended reaction which may lead to various drawbacks can be avoided. Further, due to the rapid growth rate, the scanning of the irradiation point can be performed at a practical speed and therefore the present method makes it possible to produce fiber-reinforced composites with practical efficiency.

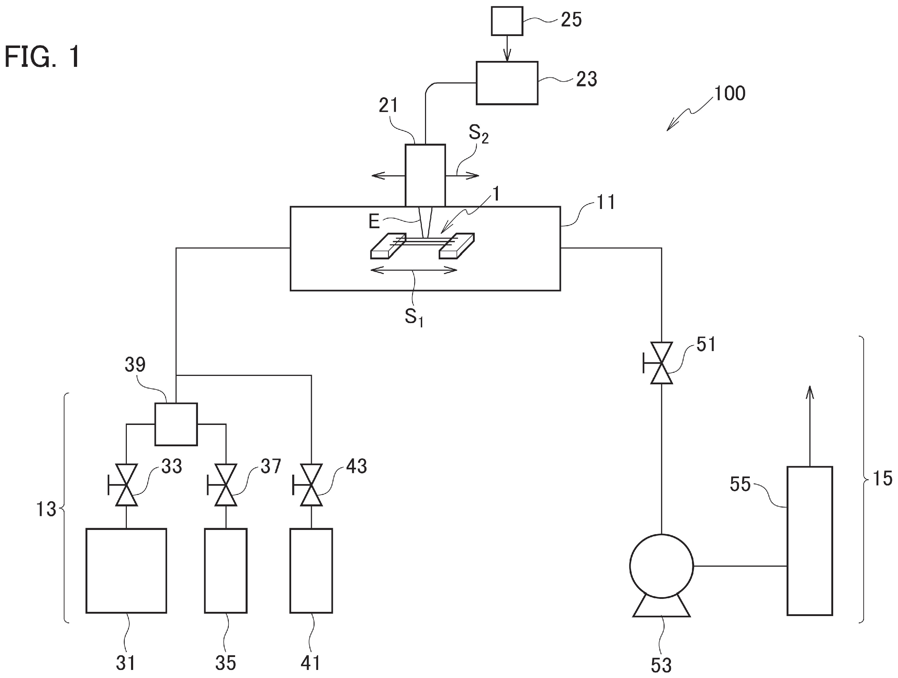

The coating device is for example the one shown in FIG. 1 in the form of a block diagram. The coating device 100 is generally provided with a chamber 11 for reaction, a feeding system 13 for feeding a precursor and such to the chamber 11, an exhaust system 15 for exhausting a waste gas after the reaction to the exterior, and piping for establishing gas-tight communication among these elements.

The chamber 11 has a proper volume sufficient to accommodate the reinforcing fiber 1 and is preferably a container keeping its interior gas-tight and capable of being depressurized. The reinforcing fiber 1, as being supported by a proper support body, is introduced into the chamber 11 and the support body is made to be movable as in an arrow S₁ by a servomotor or such.

Located externally but close to the chamber 11, the coating device 100 is provided with an energy flow source such as an irradiation device 21 and is thus configured to irradiate the reinforcing fiber 1 with energy flow such as a light beam E. Examples of the irradiation device 21 are a halogen lamp, an excimer lamp, and a laser oscillator, but any energy source is applicable as long as it promotes reaction at a focus of the energy flow.

The irradiation device 21 can be directed perpendicular to the reinforcing fiber 1, or can be directed in any other direction as long as it is not parallel to the reinforcing fiber 1. Further it is not limited to a single irradiation device 21 but two or more irradiation devices can be used. For example, in order to correct uneven heating, multiple irradiation devices 21 can be arranged axially symmetrically around the reinforcing fiber 1. In a case where the irradiation device 21 is at the exterior, the chamber 11 may be provided with a heat-resistant glass window and the irradiation device 21 is so arranged as to project the light beam E through the window. The irradiation device 21 may be also movable in an arrow S₂ by a servomotor or such.

An electric power source 23 is electrically connected to the irradiation device 21 and, under control by a controller 25, the reinforcing fiber 1 is irradiated with the light beam or energy flow E. The controller 25 may be further configured to control the aforementioned servomotors, the feeding system 13, and the exhaust system 15.

The feeding system 13 may be provided with a bottle or tank 31 storing an ingredient in a liquid phase, cylinders 35, 41 storing ingredients in a gas phase, and a vaporizer 39, for example.

The bottle or tank 31 is provided with a pump that can feed the liquid ingredient at a controlled small flow rate, and is therefore capable of feeding the ingredient to the vaporizer 39. The vaporizer 39 may be provided with a temperature-controllable heater so as to convert the liquid ingredient into the precursor in a gas phase and then feed it at a controlled flow rate to the chamber 11. To regulate the flow rate, in between the bottle or tank 31 and the vaporizer 39 for example, a regulator valve 33 may be interposed.

To the vaporizer 39, further a cylinder 35 may be connected and a gas fed from the cylinder 35 can be used as a carrier gas. Between the cylinder 35 and the vaporizer 39, further, a regulator valve 37 may be interposed.

To the feeding system 13, a combination of another cylinder 41 and a regulator valve 43 may be connected, thereby feeding another gas to the chamber 11. This gas may be an auxiliary ingredient for generating the ceramic or a gas simply for dilution. Needless to say, the cylinder and the regulator valve are not limited to a single combination but two or more sets may be applied.

The exhaust system 15 may be provided with a vacuum pump 53 in order to promote discharge and depressurize the interior of the chamber 11. The pressure inside the chamber 11 can be regulated by balancing the feeding rate by the feeding system 13 and the discharge rate by the vacuum pump 53. To regulate the discharge rate, upstream or downstream of the vacuum pump 53, a regulator valve 51 may be provided. In addition, in order to detoxify the exhaust gas, a proper disposal apparatus may be provided outside the exhaust system 15, and its example is a scrubber 55.

To measure the pressure inside the chamber 11, a vacuum gauge such as a Pirani gauge, an ionization gauge, or such may be connected to the chamber 11 or any part of the piping. Further, the output of the vacuum gauge may be used to provide feedback control on the vacuum pump 53 and the regulator valve 51.

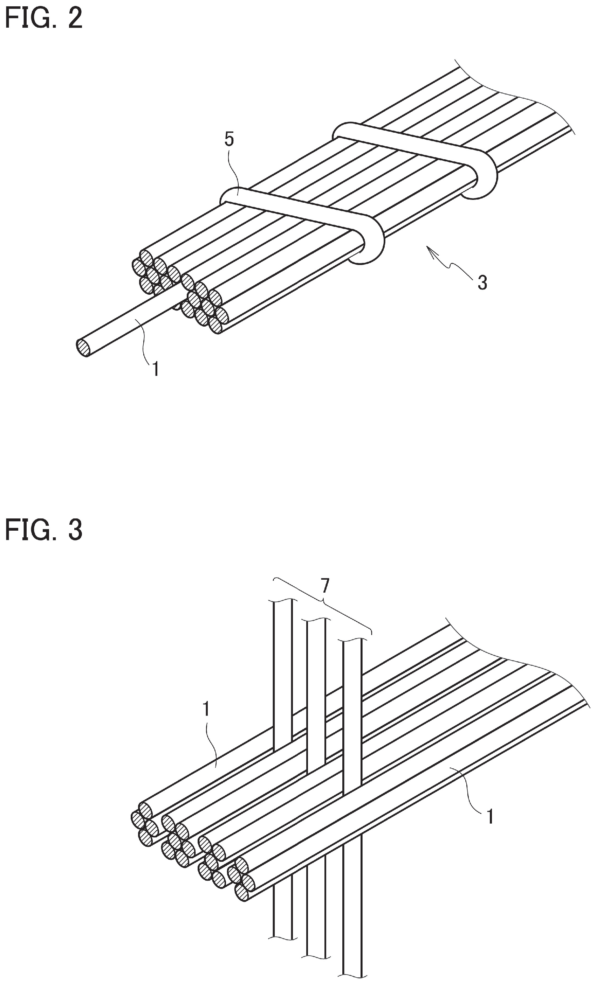

The reinforcing fiber 1 is for example formed of silicon carbide and a plurality (from 500 to 800 for example) of thin (from 10 to 15 micrometers thick for example) reinforcing fibers 1 is bundled together to form a reinforcing fiber bundle 3. As exemplarily shown in FIG. 2, sheath fibers 5 of a resin for example may be wound around the reinforcing fiber bundle 3 to keep its bundled state. Or the sheath fibers 5 may be fused in advance to form a sizing agent. Such reinforcing fiber bundle is commonly available under the name of Tyranno fiber (a registered trademark of Ube Corporation) ZMI grade, NICALON, or HINICALON (both registered trademarks of NGS Advanced Fibers Co., Ltd.).

Preferably the reinforcing fiber bundle 3 is spread prior to the ceramic growth because, if it is kept bundled, the precursor is impeded from infiltrating in between the fibers 1. Spreading may be executed by, although not limited to, a comb 7 with plural comb teeth standing in parallel as exemplarily shown in FIG. 3. By holding the comb 7 perpendicular to the reinforcing fiber bundle 3 and passing the reinforcing fiber bundle 3 through it, the reinforcing fibers 1 are spread. The sheath fibers 5 can be cut off at a time of passing through the comb 7. To promote cutting, the respective comb teeth may be edged. In addition, to promote the spreading, any heating device such as a heater may be used in combination.

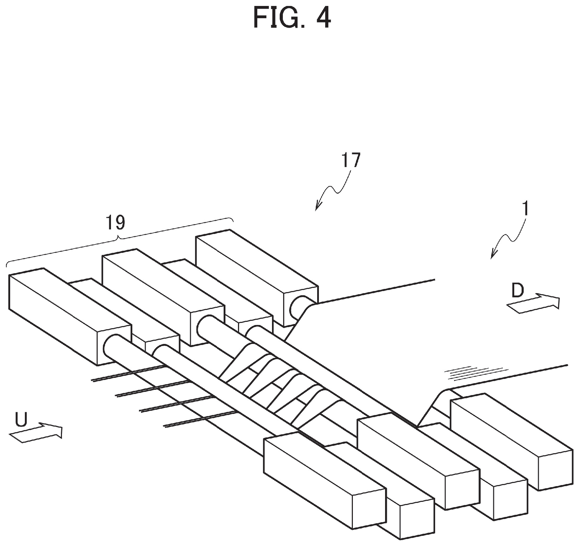

In place of, or in addition to, the comb 7, a spreading device 17 exemplarily shown in FIG. 4 may be used. The spreading device 17 is generally provided with a plurality of bars 19 and the reinforcing fibers 1 are routed over and under the bars 19 as meandering therethrough. The reinforcing fibers 1 are gently pressed onto the bars 19 with traveling therethrough, and are then spread in the width direction each time they pass over the bars 19. The spreading device 17 may be further provided with a nozzle for blowing compressed air for example onto the reinforcing fiber 1, and the blown airflow further promotes spreading the reinforcing fibers 1. The airflow may be properly heated up.

Although the spread reinforcing fibers 1 are not necessarily arranged on a single plane, they are aligned preferentially in the horizontal direction rather then the vertical direction, and are generally arranged parallel to each other. This configuration increases the area where the reinforcing fibers 1 come into contact with the precursor and is thus advantageous for promoting the ceramic growth and the bonding between the reinforcing fiber 1 by the grown ceramic.

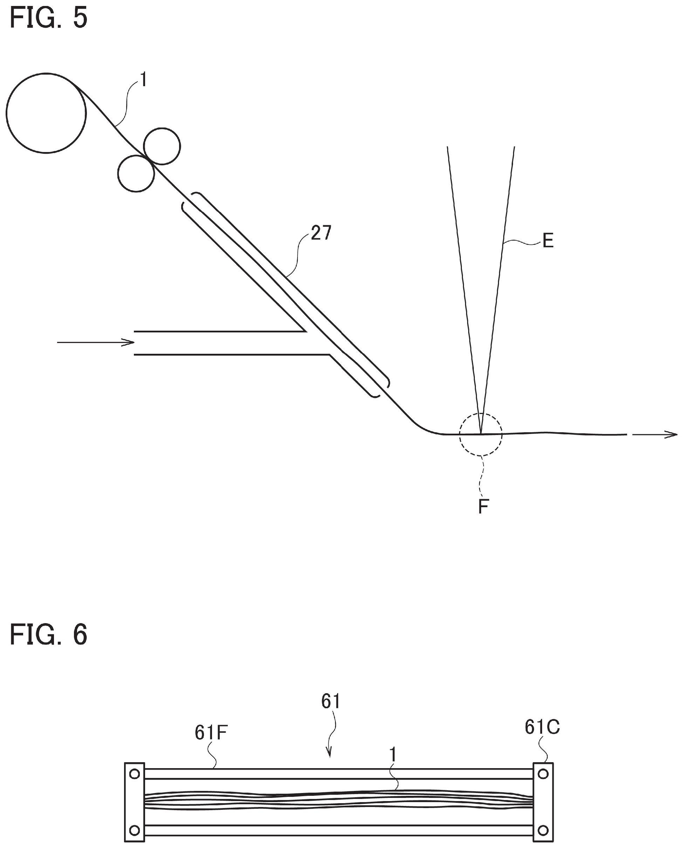

The spread reinforcing fibers 1 may be temporarily wound on a bobbin. The reinforcing fibers 1 may be, in a state of being wound around the bobbin, introduced into the coating device 100 and, while being drawn out of the bobbin as shown in FIG. 5, subject to the reaction. To guide the reinforcing fibers 1 to the reaction point, a nozzle 27 may be used for example, and the nozzle 27 may be further served as a gas supply by being connected to the feeding system 13. A slight pressure difference between the inside and the outside of the nozzle 27 causes gas flow, which serves to guide the reinforcing fibers 1 to the irradiation point and efficiently feed the precursor to the irradiation point. The entire structure shown in FIG. 5 may be moved by a servomotor or such, either independently from or in coordination with the irradiation device 21.

The reinforcing fibers 1 may be supported by a support body 61 as exemplarily shown in FIG. 6. In this example, the support body 61 is provided with a rectangular frame 61F and clamps 61C secured to both longitudinal ends thereof. The support body 61 may be alternatively provided with a backing plate and the reinforcing fibers 1 may be laid or secured on the backing plate. The support body 61 is preferably partly or totally formed of any heat-resistant material such as a C/C composite. The reinforcing fibers 1 are pinched between and supported by the clamps 61C. Alternatively, pinch rollers or sliding members may be used in place of the clamps 61C and, in this case, the reinforcing fibers 1 are allowed to travel from one end to another end of the support body 61 and then subject to the reaction while traveling.

Multiple reinforcing fibers 1 are, while being supported by the support body 61, arranged in parallel with each other and then subject to the reaction. Even after the spreading, each spacing between adjacent reinforcing fibers 1 does not increase significantly even with the spreading and remains relatively small, for example ranging from direct contact to several micrometers wide at most between the most closely spaced reinforcing fibers 1. Therefore, if the growth rate of the ceramic is appropriate, the ceramic grown on one reinforcing fiber 1 and the ceramic grown on an adjacent reinforcing fiber 1 can readily come in contact with each other and become integrated, thereby bonding the reinforcing fibers together.

Referring back to FIGs. 1 and 5 for example, the reinforcing fibers 1 are, in any of the embodiments described above, introduced into the chamber 11 and placed around the focal point of the light beam E. Preferably the chamber 11 is closed and properly depressurized by the exhaust system 15, and next the precursor is introduced therein by the feeding system 13. When the irradiation device 21 is operated to irradiate the reinforcing fibers 1 with the light beam E with keeping the interior of the chamber 11 at a pressure slightly lower than the atmospheric pressure, the precursor starts reacting so that the ceramic grows on and covers the reinforcing fibers 1 respectively. The growing ceramic covers the adjacent reinforcing fibers 1, thereby in a certain width range bonding multiple reinforcing fibers 1 together. The range where the fibers get bonded depends on the focal size.

An example of the precursor is methyltrichlorosilane. Methyltrichlorosilane can be vaporized and then subject to the reaction in a gas phase, and it undergoes a pyrolytic reaction at temperatures above 800 degrees C to produce silicon carbide. The precursor along with any carrier gas can be fed to the chamber 11. As the carrier gas, any proper gas chemically inert towards the precursor can be used and its examples are hydrogen and nitrogen for example but any rare gas such as argon or helium can be used.

Another example for producing silicon carbide is polycarbosilane. A product commonly available under the name of CVD-4000 (Starfire Systems, Inc.) for example, as being a liquid with a relatively low molecular weight and high fluidity, and it volatilizes when heated, is convenient for use in the gas phase.

Still another example is a combination of dimethylchlorosilane and hydrogen. Or, silicon carbide can be synthesized from two or more precursors such as a combination of tetrachlorosilane and tetrachloromethane, or a combination of silane and ethylene. Yet alternatively, any other alkane, alkene, or alkyne, such as methane or acetylene, can be used in combination with silane. Needless to say, when another ceramic such as silicone nitride is to be grown, any proper precursor adapted to the ceramic is used.

The method described above can be used not only for the precursor in the gas phase but also for that in the liquid phase. Polycarbosilane, for example, is a liquid and can be used to produce silicon carbide through calcination. Polycarbosilane is commonly available under the name of CVD-4000 as described above, or alternatively under the name of SMP-10 (Starfire Systems, Inc.). By immersing the reinforcing fibers 1 in this liquid or applying the liquid to the fibers 1, and irradiating the liquid-containing fibers with the light beam E similarly, a matrix of silicon carbide can be produced. For applying the liquid to the fibers, a brush or a suitable coater, or alternatively dropping means such as a syringe or a nozzle, can be used.

Alternatively, growth from the liquid phase and growth from the gas phase can be alternately repeated. Still alternatively, solid-phase precursors such as silica or carbon powder may be additionally used in combination.

The irradiation point F on the reinforcing fibers 1 is not fixed but preferably moved in a constant speed. Namely, while the irradiation of the light beam E continues, the irradiation point F is moved in the longitudinal direction of the reinforcing fibers 1 by moving the reinforcing fibers 1 or the irradiation device 21 in the longitudinal direction of the reinforcing fibers 1. Within the range where the irradiation point F moves, the ceramic grows.

Movement of the irradiation point F is possible not only in the longitudinal direction but also in the lateral direction. Namely, it is possible to, after finishing movement in the longitudinal direction over a certain distance, move the irradiation point F to an adjacent position and further move it in the longitudinal direction. By repeating this operation, the ceramic can be generated in a two-dimensional and planar form. Needless to say, the reinforcing fibers 1 are bonded together in a two-dimensional and planar form by the ceramic to form a two-dimensional fiber-reinforced composite. Moreover, by subsequently and serially overlaying new reinforcing fibers 1 vertically and repeating the same process, it is possible to produce a three-dimensional fiber-reinforced composite. When overlaying them vertically, the new reinforcing fibers 1 may be laid not in parallel with the previous reinforcing fibers 1 but in any intersecting direction. This helps to increase the strength of the fiber-reinforced composite and also improves its isotropy.

The following tests have been conducted in order to demonstrate effects provided by the present embodiment.

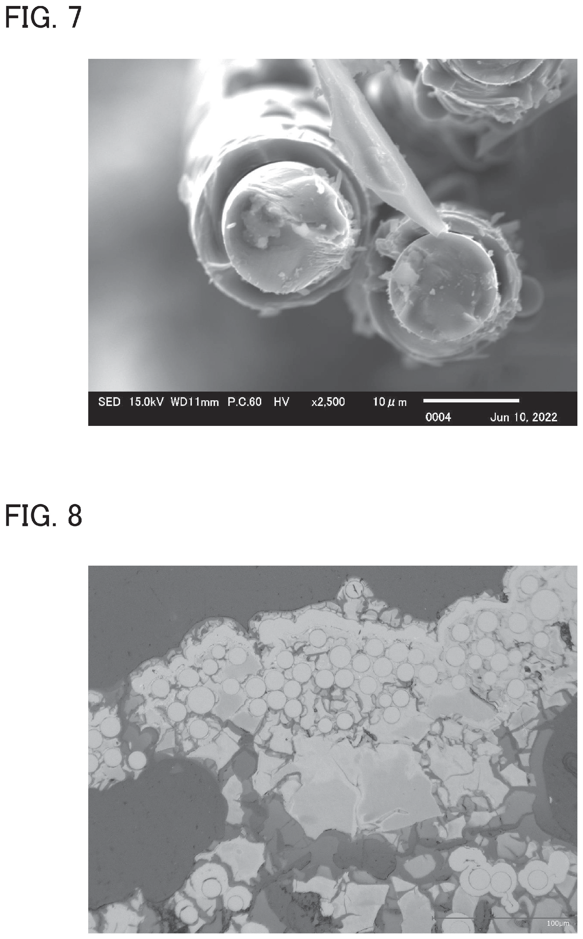

Silicon carbide fibers respectively coated with boron nitride were supported by a support body, methyltricrolosilane were used as an ingredient, diluted with hydrogen and fed to the chamber, and the pressure inside the chamber was maintained at a reduced pressure of -70 kPa from atmospheric pressure. A halogen lamp was placed outside the chamber, its reflector was adjusted to focus its light onto the fiber, and the fibers were irradiated through the heat-resistant glass window. The size of the focal point appeared to be on the order of few mm according to a visual observation. It is evident that the fibers became incandescent in a very short time just after the irradiation began and then the temperature rose to over 800 degrees C. After 120 seconds of continuation, the irradiation was stopped and the fibers were cooled slowly and thereafter taken out of the chamber. The fibers with the coating were snapped manually, and its cross-section was observed using a scanning electron microscope (SEM). The SEM image is shown in FIG. 7. Objects that appear round in the cross-section are apparently originated from the silicon carbide fibers originally introduced into the chamber, since its diameter is 10 micrometers in average. Other objects respectively covering the round objects are acknowledged and apparently coating grown from the gas phase. Its thickness was measured to range from 1.6 to 1.85 micrometers. The thickness is 1.7 micrometers in average and the growth rate is estimated to be 0.85 micrometer/min.

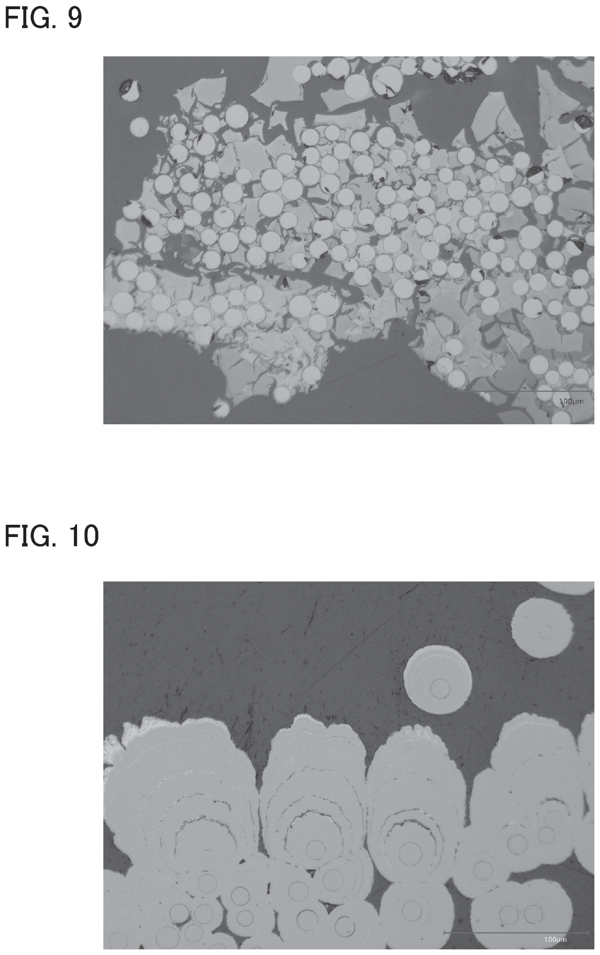

Another test was conducted to grow a ceramic from an ingredient in a liquid phase. Silicon carbide fibers respectively coated with boron nitride were similarly fixed to the support body, and thereafter SMP-10 was applied thereto by dropping it with a syringe. The silicon carbide fibers along with the support body were introduced into the chamber, the pressure inside the chamber was maintained at a reduced pressure of -100 kPa from atmospheric pressure, and, while irradiating them with a laser beam with an output power of 20 W, the irradiation point was moved by moving the support at a speed of 0.5 mm/s. The fibers were, after being cooled slowly, taken out of the chamber, embedded in resin, polished to create a cross-section, and then subject to optical microscopic observation (FIG. 9). Gaps between the round structures considered to be the silicon carbide fibers are filled with other structures, which can be acknowledged to be the coating grown from the liquid phase. Moreover, it is apparent that the coating grown from the liquid phase binds the fibers together.

Still another tests were conducted, in which liquid phase growth and gas phase growth were executed in combination. As with the test described above, SMP-10 was dropped onto silicon carbide fibers fixed to the support body, the pressure was maintained at a reduced pressure of -100 kPa from atmospheric pressure, and the support body was moved at a speed of 0.5 mm/s while the fibers were irradiated with a laser beam with an output power of 20 W. Further, subsequently, methyltrichlorosilane was fed into the chamber, the inside was maintained at a reduced pressure of from -80 to -20 kPa from atmospheric pressure, and the support body was moved at a speed of 0.2 mm/s while the fibers were irradiated with a laser beam with an output power of 35 W. The fibers were, after being cooled slowly, taken out of the chamber, embedded in resin, polished to create a cross-section, and then subject to optical microscopic observation (FIG. 8). As being understood from FIG. 8, distinct layers can be found as upper and lower layers mainly above and below the group of the fibers, and it is speculated that the upper layer is grown from the gas phase and the lower layer is grown from the liquid phase. Both these coatings cover the silicon carbide fibers and bind the silicon carbide fibers together.

Yet another test was conducted, in which the gas phase ingredient and the laser beam were used. After fixing silicon carbide fibers to the support body, the fibers along with the support body were introduced into the chamber, methyltrichlorosilane was fed therein, the inside was maintained at a reduced pressure of from -80 to -20 kPa from atmospheric pressure, and the support body was moved at a speed of 0.2 mm/s while the fibers were irradiated with a laser beam with an output power of 35 W. The fibers were, after being cooled slowly, taken out of the chamber, embedded in resin, polished to create a cross-section, and then subject to optical microscopic observation (FIG. 10). The coatings on the fibers are closely in contact with each other to bind the fibers together. Looking at each fiber individually, the thickness is 20 micrometers in average. Assuming the diameter of the irradiation point is 1 mm, the time spent under the irradiation point is estimated to be 10 seconds. The growth rate can be thus estimated to be 2 micrometer/s. This is significantly higher than the growth rates achieved by conventional CVI methods and the others.

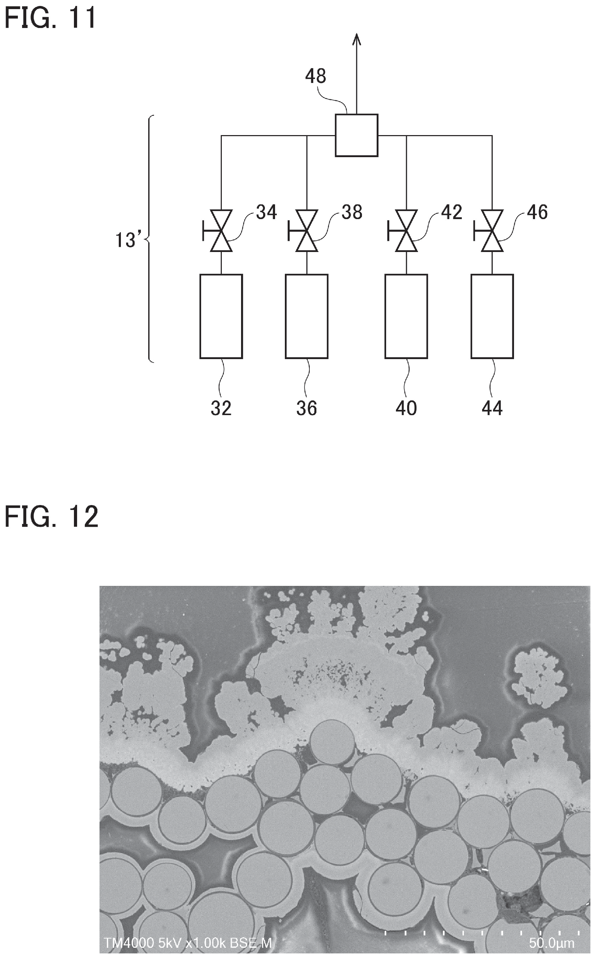

The other test was further conducted, in which a combination of silane and ethylene was used as an ingredient to grow a silicon carbide coating. Unlike the case of using methyltrichlorosilane in a liquid phase at the room temperature, as all the components of the ingredient are in a gas phase, a feeding system 13' shown in FIG. 11 was used in place of the feeding system 13 shown in FIG. 1. More specifically, the cylinders 32, 36, 40 and 44 respectively store monosilane (SiH₄), ethylene (C₂H₄), hydrogen (H₂), and nitrogen (N₂) in no particular order, and are connected to a mixer 48 through regulator valves 34, 38, 42 and 46, which are then connected to chamber 11. Nitrogen is mainly used to purge the inside of the device. By opening or throttling the regulator valves 34, 38, 42 and 46, feeding and stopping the respective gases, and the mixing ratio of these gases, were controlled.

Silicon carbide fibers coated with boron nitride were fixed to the support body and introduced into the chamber, and, after sufficiently purging the chamber with nitrogen, monosilane at 0.2 slm (standard liters per minute), ethylene at 0.1 slm, and hydrogen at 1.0 slm were continuously fed into the chamber, and the inside of the chamber was maintained at a reduced pressure of -30 kPa from atmospheric pressure. With laser irradiation with an output power of 65W, the irradiation point was moved by moving the support body at a speed of 0.2 mm/s, thereby causing gas phase growth. The condition of the chamber remained under a reduced pressure of -30±20 kPa from atmospheric pressure during the gas phase growth. After being cooled slowly, the fibers were taken out of the chamber, embedded in resin, polished to create a cross-section, and then subject to SEM observation. The SEM image is shown in FIG. 12. Coating layers are respectively observed around objects that appear round in the cross-section, and determined to be silicon carbide grown from the gas phase. Its growth rate estimated from these thicknesses is 3.0 micrometer/min. Further the coating, at least partly, binds the fibers together.

In sum, on the basis of the aforementioned tests, it can be confirmed that silicon carbide coatings can be formed on silicon carbide fibers and thereby bind the fibers together.

Although certain embodiments have been described above, modifications and variations of the embodiments described above will occur to those skilled in the art, in light of the above teachings.

### INDUSTRIAL APPLICABILITY

An art for covering a reinforcing fiber with a ceramic rapidly is provided.

## Claims

1. A method for coating a reinforcing fiber with a ceramic, comprising:
introducing the reinforcing fiber into an atmosphere including a gas-phase precursor;
irradiating an irradiation point on the reinforcing fiber with a light beam so as to heat the irradiation point to 800 degrees C or higher, whereby the ceramic grows on the irradiation point; and
moving the irradiation point along a length of the reinforcing fiber.

2. The method of claim 1, wherein the irradiating is carried out by one or more selected from the group of a halogen lamp, an excimer lamp, and a laser oscillator.

3. The method of claim 1, wherein the precursor consists of one or more selected from any combinations of any of methyltrichlorosilane, dimethyltrichlorosilane, polycarbosilane, and silane and any selected from methane, ethylene and acetylene.

4. The method of claim 1, further comprising:
mixing the precursor with a carrier gas and reducing a total pressure from atmospheric pressure by from 20 kPa to 100 kPa.

5. The method of claim 1, further comprising:
arranging a second reinforcing fiber in parallel to the reinforcing fiber; and
irradiating the second reinforcing fiber with the light beam simultaneously with or subsequently to the irradiating the reinforcing fiber, whereby the reinforcing fiber and the second reinforcing fiber are bonded together by the ceramic.

## Amended claims

### Amended claims under Art. 19.1 PCT

1. (amended) A method for coating a reinforcing fiber with a ceramic, comprising:
introducing the reinforcing fiber of silicon carbide coated with carbon, silicon carbide, silicon nitride, alumina, or boron nitride into an atmosphere including a gas-phase precursor;
irradiating an irradiation point on the reinforcing fiber with a light beam so as to heat the irradiation point to 800 degrees C or higher, whereby the precursor is forced to react and generate the ceramic on the irradiation point on the reinforcing fiber; and
moving the irradiation point along a length of the reinforcing fiber.

2. The method of claim 1, wherein the irradiating is carried out by one or more selected from the group of a halogen lamp, an excimer lamp, and a laser oscillator.

3. The method of claim 1, wherein the precursor consists of one or more selected from any combinations of any of methyltrichlorosilane, dimethyltrichlorosilane, polycarbosilane, and silane and any selected from methane, ethylene and acetylene.

4. The method of claim 1, further comprising:
mixing the precursor with a carrier gas and reducing a total pressure from atmospheric pressure by from 20 kPa to 100 kPa.

5. The method of claim 1, further comprising:
arranging a second reinforcing fiber in parallel to the reinforcing fiber; and
irradiating the second reinforcing fiber with the light beam simultaneously with or subsequently to the irradiating the reinforcing fiber, whereby the reinforcing fiber and the second reinforcing fiber are bonded together by the ceramic.

Statement under Art. 19.1 PCT
While the original claim 1 fails to specify a material applied to the reinforcing fiber subject to ceramic coating, the amended claim 1 clarifies that the fiber is formed of silicon carbide coated with carbon, silicon carbide, silicon nitride, alumina, or boron nitride, and further clarifies that the ceramic grows directly on the reinforcing fiber.

The citation (International Publication WO 2019/103145 A1) discloses an invention directed to a reinforcing fiber provided with an environment-resistive coating, wherein an additional coating of silicon carbide (a ceramic) is grown by a gas phase synthesis method similar to the present invention. From the description in the paragraph 0051 thereof, however, it is apparent that the present invention differs in that the additional coating layer in the cited art grows on a ytterbium silicate layer, not directly on the reinforcing fiber.

The present invention is directed to light energy irradiation concentrated on a limited irradiation point on a reinforcing fiber and thereby enables prominently rapid ceramic growth as compared with the prior art.
